# EUROPÄISCHE PATENTSCHRIFT

(11) **EP 3 622 015 B1**
(45) Veröffentlichungstag und Bekanntmachung des Hinweises auf die Patenterteilung: **07.04.2021**
(21) Anmeldenummer: 18722080.1
(22) Anmeldetag: 11.05.2018
(51) Int. Cl.: C08K 3/36, C08K 5/372, C08K 5/548, B60C 1/00

(54) **KAUTSCHUKMISCHUNGEN ENTHALTEND SCHWEFELHALTIGE ORGANOSILICIUMVERBINDUNGEN**
RUBBER COMPOSITIONS CONTAINING SULPHUR-CONTAINING ORGANOSILICON COMPOUNDS
MÉLANGES DE CAOUTCHOUC CONTENANT DES COMPOSÉS DE SILICIUM ORGANIQUE CONTENANT DU SOUFRE

(30) Priorität: 12.05.2017 EP 17170897
(43) Veröffentlichungstag der Anmeldung: 18.03.2020
(73) Patentinhaber: LANXESS Deutschland GmbH, 50569 Köln (DE)
(72) Erfinder: WEIDENHAUPT, Hermann-Josef, 50259 Pulheim (DE); MOLL, Irene, 41468 Neuss (DE)
(86) Internationale Anmeldenummer: PCT/EP2018/062247
(87) Internationale Veröffentlichungsnummer: WO 2018/206787

(56) Entgegenhaltungen:
- EP-A2- 0 941 872
- US-A1- 2011 112 215

## Beschreibung

Die vorliegende Erfindung betrifft schwefelhaltige Organosiliciumverbindungen enthaltende Kautschukmischungen sowie die Verwendung von Organosiliciumverbindungen zur Herstellung dieser Kautschukmischungen, aus diesen Kautschukmischungen erhältliche Vulkanisate und Formkörper, insbesondere Reifen mit geringem Rollwiderstand guter Nasshaftung und geringen Emissionen von flüchtigen organischen Komponenten (VOC) bei der Herstellung.

Schwefel enthaltende Organosiliciumverbindungen, die als Verstärkungsadditive in Kautschukmischungen eingesetzt werden können, sind bekannt. So werden in DE2141159, DE2141160 und DE2255577 Organosilane als Verstärkungsadditive insbesondere für kieselsäurehaltige Kautschukvulkanisate für Reifenanwendungen beschrieben. Die in den Beispielen beschriebenen Strukturen leiten sich von Triethoxysilylpropyltetrasulfid (TESPT) ab. DE2035778 offenbart Verstärkungsadditive auf Organosilanbasis. In den genannten Patentanmeldungen leiten sich alle Beispiele von Trialkoxysilylpropyl-Ausgangsverbindungen ab. Nachteilig an diesen Verbindungen ist, dass die Hystereseverluste nicht nur bei hohen Temperaturen (ca. 60°C, korrelierend mit dem Rollwiderstand), sondern auch bei tiefen Temperaturen (0°C) gesenkt werden. Es ist jedoch bekannt, dass eine geringe Hysterese bei tiefen Temperaturen (0 bis 20°C) mit einem schlechten Nassrutschverhalten bei Kfz-Reifen einhergeht.

EP447066 beschreibt ebenfalls die Verwendung solcher Organosilane auf Trialkoxysilylpropylpolysulfid-Basis zur Herstellung von in hohem Maße Kieselsäure-gefüllten Reifenlaufflächen. Durch Kombination eines speziellen, silanmodifizierten Kautschuks, Kieselsäure-Füllstoffs und Organosilans gelang es, den Rollwiderstand des Reifens zu verringern. Die als geeignet genannten Vertreter besitzen Alkylbrücken (-CH₂CH₂-). Auch in diesen Reifenmischungen zeigt sich, dass die genannten Chemikalien nicht nur den Rollwiderstand senken, sondern auch die Nasshaftung verringern.

EP0680997 offenbart die Verwendung von Bis-(dimethylethoxysilylmethylen)-polysulfid als Verstärkungsadditiv für Kautschukmischungen mit gutem Rollwiderstand und Nasshaftung. Nachteilig sind hier einerseits die bislang großtechnisch nicht zugänglichen Rohstoffe, die über eine Photochlorierung hergestellt werden müssen und andererseits eine erhebliche Verschlechterung der anwendungstechnischen Eigenschaften wie Festigkeit, Bruchdehnung und Härte.

In KGK (2015), 68(4), 38-45 beschreiben Noordermeer at al. die Verwendung von verschiedenen Verstärkungsadditiven wie Bis-(dimethylethoxysilylpropyl)tetrasulfid (DMESPT) und höheren Alkylhomologen wie z.B. Bis-(triethoxysilyldecanyl)tetrasulfid (TESDeT). In den genannten Beispielen senkt DMESPT im Vergleich zu TESPT die Hysterese im niedrigen Temperaturbereich ab, was eine Verringerung der Nasshaftung bedeutet. Zudem verringert sich die Ausvulkanisationszeit T95 bei Verwendung von DMESPT im Vergleich zu TESPT um etwa 70%, was insbesondere bei der Vulkanisation von Formkörpern, die aus verschiedenen Kautschukmischungen bestehen, wie zum Beispiel Reifen, zu erheblichen Problemen durch die unterschiedlichen Vulkanisationsgeschwindigkeiten führt. In einem weiteren Beispiel wird TESDeT mit TESPT verglichen, wobei bei längerer C-Kettenlänge Vorteile bei der Nasshaftung und auch bzgl. des Rollwiderstandes zu erkennen sind. Als großer Nachteil von TESDeT wird das hohe Molekulargewicht genannt, so dass bei äquimolarer Verwendung deutlich höhere Mengen im Vergleich zu TESPT eingesetzt werden müssen. Zudem werden pro Molekül TESDeT typischerweise sechs Moleküle Ethanol abgespalten, was eine dreimal so große Emissionen von VOC bedeutet.

Somit bestand die Aufgabe neue schwefelhaltige Organosiliciumverbindungen, bzw. diese enthaltende Kautschukmischungen bereitzustellen, welche die oben genannten Nachteile des Stands der Technik vermeiden.

Es wurde nun überraschenderweise gefunden, dass schwefelhaltige Organosiliciumverbindungen mit jeweils einer in 2-Position verzweigten Propylengruppe als Spacer zwischen den Silicium- und den Schwefel-atomen in Kautschukmischungen eine zwischen DMESPT und TESPT einzuordnende günstige Ausvulkanisationszeit T95 aufweisen, dabei zu Vulkanisaten mit vorteilhaften temperaturabhängigen Hystereseeigenschaften führen, wobei auch anwendungstechnische Eigenschaften wie Festigkeit und Bruchdehnung positiv beeinflusst werden.

Gegenstand der vorliegenden Erfindung sind daher Kautschukmischungen enthaltend mindestens einen Kautschuk, mindestens einen Füllstoff, sowie mindestens eine Verbindung der Formel (I) 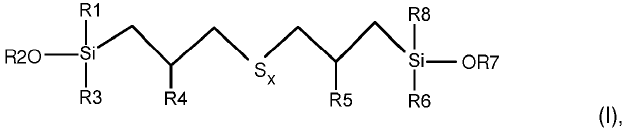 worin
R1, R3, R6 und R8 gleich oder verschieden sind und Methyl oder Ethyl, vorzugsweise Methyl bedeuten,
R4, und R5 gleich oder verschieden sind und Methyl oder Ethyl, vorzugsweise Methyl bedeuten,
R2 und R7 gleich oder verschieden sind und Methyl oder Ethyl, vorzugsweise Ethyl bedeuten, und
x = 4 bedeutet.

Bevorzugt sind Verbindungen der Formel (I) worin R2 und R7 Ethyl bedeuten.

Besonders bevorzugt sind Verbindungen der Formel (I) worin R1, R3, R6 und R8 Methyl und R2 und R7 Ethyl bedeuten.

Meist bevorzugt sind Verbindungen der Formel (I) worin R1, R3, R6 und R8 Methyl bedeuten, R4 und R5 Methyl bedeuten und R2 und R7 Ethyl bedeuten.

Die Herstellung der Verbindungen der Formel (I) kann durch Umsetzung von Mercaptogruppen-haltigen Silanen mit Dischwefeldichlorid unter Abspaltung von HCl erfolgen. Die Reaktion wird in an sich bekannter Art und Weise bei Temperaturen von -30 bis +80°C, gegebenenfalls in Gegenwart von Lösungsmitteln, wie Alkoholen oder aromatischen Kohlenwasserstoffen, durchgeführt: 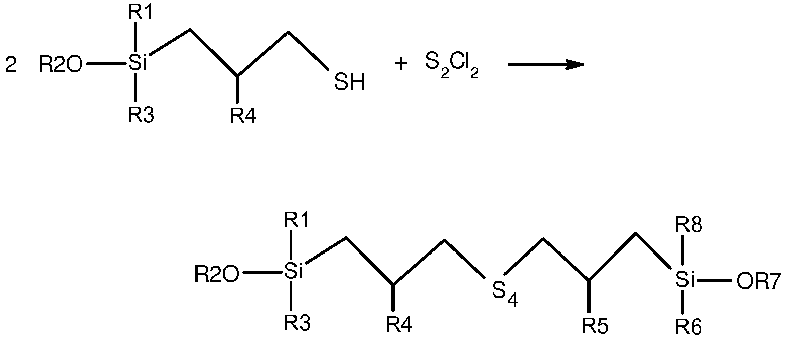 wobei R1 bis R8 die oben beschriebene Bedeutung haben.

Zur Durchführung der Reaktion wird auf Houben-Weyl, Methoden der organischen Chemie, Band 9, Seite 88 ff. (1955) und Band E 11 (1985), Thieme Verlag, Stuttgart verwiesen.

In besonders vorteilhafter Weise gelingt die Herstellung der Verbindungen der Formel (I) durch Umsetzung von Halogenalkylsilylether und Polyhalogenide mit Metallpolysulfiden in Gegenwart von alkoholischen Lösungsmitteln bei Temperaturen von -20 bis +90°C: 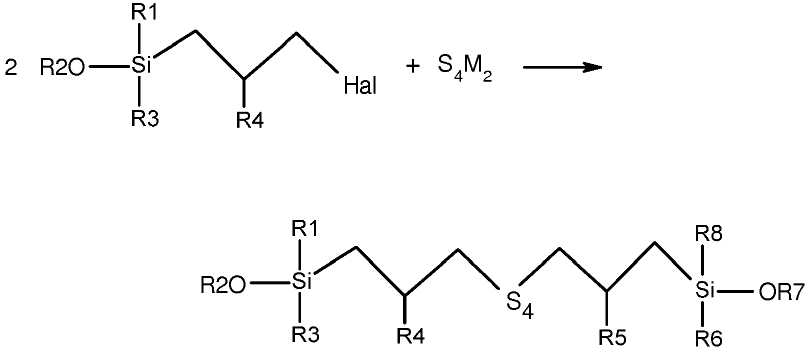 wobei R1 bis R8 die oben beschriebene Bedeutung haben und Hal für Halogen und M für Lithium, Natrium oder Kalium steht.

Als Lösungsmittel werden bevorzugt Alkohole eingesetzt, wie Methanol, Ethanol, n-Propanol, i-Propanol, i-Butanol, Amylalkohol, Hexylalkohol, n-Octanol, i-Octanol, Ethylenglykol, 1,2- und 1,3-Propylenglykol, 1,4-Butandiol und/oder 1,6-Hexandiol.

Typischerweise beträgt der Gehalt an Verbindungen der Formel (I) in den erfindungsgemäßen Kautschukmischungen 0,1 bis 15 phr, vorzugsweise 1 bis 12 phr, besonders bevorzugt 2 bis 10 phr und ganz besonders bevorzugt 3 bis 8 phr. Die Einheit phr bezieht sich dabei auf Gewichtsteile pro 100 Gewichtsteile Kautschuk.

Die Verbindungen der Formel (I) können sowohl einzeln als auch zusammen mit anderen Verstärkungsadditiven eingesetzt werden.

Die Verbindungen der Formel (I) können sowohl in reiner Form als auch aufgezogen auf einen inerten organischen oder anorganischen Träger den Kautschukmischungen zugesetzt werden. Als Trägermaterialien eignen sich insbesondere Kieselsäuren, natürliche oder synthetische Silikate, Aluminiumoxid sowie Ruße.

Als Füllstoffe werden bevorzugt hydroxylgruppenhaltige oxidische Füllstoffe verwendet, beispielsweise:
- Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 100 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen.
- Synthetische Silikate, wie Aluminiumsilikat, Erdalkalisilikate wie Magnesiumsilikat oder Calciumsilikat, mit BET-Oberflächen von 20 bis 400 m ²/g und Primärteilchendurchmessern von 10 bis 400 nm.
- Natürliche Silikate, wie Kaolin und andere natürlich vorkommende Kieselsäuren.
- Glasfasern und Glasfaserprodukte (Matten, Stränge) oder Mikrokugeln.

Bevorzugt werden Kieselsäuren, hergestellt durch Fällung von Lösungen von Silikaten mit BET-Oberflächen von 20 bis 400 m²/g in Mengen von 5 bis 150 Gew.-Teilen bezogen auf 100 Gew.-Teile Kautschuk, zusammen mit den erfindungsgemäßen Verstärkungsadditiven (I) eingesetzt.

In der Kautschukmischung beträgt der Gewichtsanteil an hydroxylgruppenhaltigen oxidischen Füllstoffen mindestens 10 %, vorzugsweise mindestens 20 %, besonders bevorzugt mindestens 50 % und am meisten bevorzugt mindestens 80 % des Gesamtfüllstoffgehalts.

Weiterhin können Ruße als Füllstoffe verwendet werden. Die hierbei zu verwendenden Ruße sind nach dem Flammruß-, Furnace- oder Gasrußverfahren hergestellt und besitzen BET-Oberflächen von 20 bis 200 m²/g, wie z.B. SAF-, ISAF-, IISAF-, HAF-, FEF- oder GPF-Ruße. Besonders bevorzugt werden die Ruße zusammen mit Kieselsäuren verwendet.

Der Gehalt an Füllstoffen in den Kautschukmischungen beträgt typischerweise 10 bis 170 phr, bevorzugt 30 bis 130 phr und besonders bevorzugt 50 bis 110 phr.

In einer ganz besonders bevorzugten Ausführungsform des Verfahrens werden 10 bis 150 Teile Kieselsäuren, gegebenenfalls zusammen mit 0 bis 20 Gew.-Teilen Ruß, sowie 1,5 bis 10 Gew.-Teilen Verbindungen der Formel (I), jeweils bezogen auf eingesetzten Kautschuk zur Herstellung der Vulkanisate eingesetzt.

Die Kautschukmischungen enthalten in einer bevorzugten Ausführungsform zusätzlich einen oder mehrere Vernetzer.

In einer bevorzugten Ausführungsform enthalten die erfindungsgemäßen Kautschukmischungen auch einen oder mehrere Vernetzer. Hierfür sind insbesondere Schwefel-basierende, Magnesiumoxid und/oder Zinkoxid, sowie peroxidische Vernetzer geeignet, wobei Schwefel-basierte Vernetzer besonders bevorzugt sind.

Als Vernetzer kann Schwefel in elementarer löslicher oder unlöslicher Form oder in Form von Schwefelspendern eingesetzt werden. Als Schwefelspender kommen beispielsweise Dithiodimorpholin (DTDM), 2-Morpholinodithiobenzothiazol (MBSS), Caprolactamdisulfid, Dipentamethylenthiuramtetrasulfid (DPTT) und Tetramethylthiuramdisulfid (TMTD) in Frage.

Als peroxidische Vernetzer werden vorzugsweise Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)butan, 4,4-Di-tert-butylperoxynonylvalerat, Dicumylperoxid, 2,5-Dimethyl-2,5-di(tert-butylperoxy)hexan, tert-Butylcumylperoxid, 1,3-Bis(t-butylperoxyisopropyl)benzol, Di-tert-butylperoxid und 2,5-Dimethyl-2,5-di(tert-butylperoxy)-3-hexin eingesetzt.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellitat, Ethylenglycoldi(meth)acrylat, Butandioldi(meth)acrylat, Trimetylolpropan-tri(meth)acrylat, Zinkdiacrylat, Zinkdimethacrylat, 1,2-Polybutadien oder N,N'-m-Phenylen-dimaleinimid geeignet.

Zudem können noch die bekannten Vulkanisationsbeschleuniger, wie Mercaptobenzthiazole, Mercaptosulfenamide, Thiocarbamate, Thiocarbonate und Dithiophosphate sowie weitere Schwefelspender wie Dithiodicaprolactame, Dithiodimorpholine und Xanthogenate zugesetzt werden können. Sowohl die Vulkanisationsbeschleuniger als auch die Vernetzungsmittel können einzeln oder im Gemisch untereinander eingesetzt werden. Besonders bevorzugt wird Schwefel als Vernetzungsmittel eingesetzt. Die Vernetzungsmittel und die Vulkanisationsbeschleuniger werden jeweils in Mengen von 0,1 bis 10 Gew.-%, bevorzugt 0,2 bis 5 Gew.-%, bezogen auf den jeweils eingesetzten Kautschuk, eingesetzt.

Bevorzugt werden den erfindungsgemäßen Kautschukmischungen noch die dem Fachmann geläufigen Kautschukhilfsmittel zugesetzt, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Reaktionsverzögerer, Metalloxide sowie Aktivatoren wie Triethanolamin, Polyethylenglykol, Hexantriol.

Die genannten Kautschukhilfsmittel werden typischerweise in den konventionellen Mengen von 0,1 bis 30 phr eingesetzt.

In Bezug auf Vernetzer, Vulkanisationsbeschleiniger und Kautschukhilfsmittel sei auf die in der EP2897814 genannten Verbindungen verwiesen, die analog bei der vorliegenden Anmeldung zur Anwendung gelangen können.

Für die Herstellung der erfindungsgemäßen Kautschukmischungen können Naturkautschuk und/oder Synthesekautschuke verwendet werden. Bevorzugte Synthesekautschuke sind beispielsweise
BR - Polybutadien
ABR - Butadien/Acrylsäure-C₁-C₄₋alkylester-Copolymerisat
CR - Polychloropren
IR - Polyisopren
SBR - Styrol/Butadien-Copolymerisate mit Styrolgehalten von 1 - 60, vorzugsweise 20-50 Gew-%
IIR - Isobutylen/Isopren-Copolymerisate
NBR - Butadien/Acrylnitril-Copolymerisate mit Acrylnitrilgehalten von 5-60, vorzugsweise 10-50 Gew.-%
HNBR - teilhydrierter oder vollständig hydrierter NBR-Kautschuk
EPDM - Ethylen/Propylen/Dien-Copolymerisate
sowie Mischungen aus zwei oder mehr dieser Kautschuke.

Bevorzugt enthalten die erfindungsgemäßen Kautschukmischungen mindestens einen SBR-Kautschuk, bevorzugt einen funktionalisierten SBR-Kautschuk und ggf. ein oder mehrere BR-Kautschuke.

Ganz besonders bevorzugt sind Kautschukmischungen, die ein Gewichtsverhältnis SBR:BR von 100:0 bis 60:40 aufweisen.

In einer weiteren vorteilhaften Ausführungsform enthalten die erfindungsgemäßen Kautschukmischungen zudem mindestens einen NR-Kautschuk.

Besonders vorteilhaft ist die Kombination Kieselsäure als Füllstoff und Lösungs-SBR und BR als Kautschuk zur Herstellung von Laufflächenmischungen für Reifen.

In Silica-basierten Reifenmischungen wird typischerweise Diphenylguanidin (DPG) oder strukturähnliche aromatische Guanidine als Sekundärbeschleuniger eingesetzt, um die Vernetzungsgeschwindigkeit und die Mischungsviskosität innerhalb des Mischprozesses gezielt einstellen zu können. Ein sehr entscheidendes, negatives Merkmal beim Einsatz von DPG ist jedoch, dass dieses während der Vulkanisation karzinogenes Anilin frei setzt. Nun wurde überraschender Weise gefunden, dass bei den erfindungsgemäßen Kautschukmischungen DPG durch Vulcuren oder TBzTD (Tetrabenzylthiuramdisulfid) substituiert werden kann.

Die vorliegende Erfindung umfasst daher auch im wesentlichen DPG-freie Kautschukmischungen. Darunter sind Kautschukmischungen zu verstehen, die einen Gehalt an Diphenylguanidin und/oder substituierten Diphenylguanidinen von maximal 0,4 phr, vorzugsweise maximal 0,2, weiter bevorzugt weniger als 0.1 und ganz besonders bevorzugt weniger als 0,01 phr aufweisen. Die Einheit phr steht dabei für Gewichtsteile bezogen auf 100 Gewichtsteile an in der Kautschukmischung eingesetztem Kautschuk. In einer bevorzugten Ausführungsform enthalten die im wesentlichen DPG-freien Kautschukmischungen Vulcuren oder TBzTD, besonders bevorzugt Vulcuren.

Ein weiterer Gegenstand der vorliegenden Erfindung ist ein Verfahren zur Herstellung von Kautschukmischungen, durch Mischen von mindestens einem Kautschuk mit mindestens einem Füllstoff und mindestens einer Verbindung der Formel (I). Diese erfolgt vorzugsweise bei 60 bis 200°C, besonders bevorzugt bei 90 bis 180°C.

Typischerweise werden dabei 10 bis 170 phr, bevorzugt 30 bis 130 phr und besonders bevorzugt 50 bis 110 phr Füllstoff, sowie 0,1 bis 15 phr, vorzugsweise 1 bis 12 phr, besonders bevorzugt 2 bis 10 phr und ganz besonders bevorzugt 3 bis 8 phr Verbindung der Formel (I) eingesetzt. Weiterhin können im Mischverfahren die oben genannten zusätzlichen Füllstoffe, Vernetzer, Vulkanisationsbeschleuniger und Kautschukhilfsmittel, vorzugsweise in den oben angegebenen Mengen zugesetzt werden.

Da Polysulfide bei hohen Temperaturen Umlagerungsreaktionen untergehen können (vgl. Ralf Steudel, The Chemistry of Organic Polysulfanes, Chem. Rev., 2002, 102, 3905-3945) könnte ein Verfahren zur Herstellung der erfindungsgemäßen Kautschukmischungen auch dadurch erfolgen, dass Verbindungen der Formel (I) mit x=2 bei einer Temperatur von 100 bis 200°C, vorzugsweise 130 bis 180°C mit Schwefel und Kautschuk vermischt werden, wodurch sich in situ unter Einbau von Schwefelatomen Verbindungen der Formel (I) mit x=4 bilden.

Die Herstellung der erfindungsgemäßen Kautschukmischungen erfolgt in üblicher Weise in bekannten Mischaggregaten, wie Walzen, Innenmischern und Mischextrudern bei Massetemperaturen von 60 bis 200°C, vorzugsweise 100 bis 200°C und bei Scherraten von 1 bis 1000 sec⁻¹.

Die Zugabe der Verbindungen der Formel (I) sowie die Zugabe der Füllstoffe erfolgt bevorzugt im ersten Teil des Mischprozesses bei Massetemperaturen von 60 bis 200°C, vorzugsweise 100 bis 200°C und den erwähnten Scherraten. Sie kann jedoch auch in späteren Teilen des Mischprozesses bei tieferen Temperaturen (40 bis 130°C, vorzugsweise 40 bis 100°C) z.B. zusammen mit Schwefel und Vulkanisationsbeschleunigern erfolgen.

Ein weiterer Gegenstand der vorliegenden Erfindung ist ein Verfahren zur Vulkanisation der erfindungsgemäßen Kautschukmischungen, welche bevorzugt bei Massetemperaturen von 100 bis 200 °C, besonders bevorzugt bei 130 bis 180 °C durchgeführt wird. In einer bevorzugten Ausführungsform geschieht die Vulkanisation bei einem Druck von 10 bis 200 bar.

Die vorliegende Erfindung umfasst auch Kautschukvulkanisate erhältlich durch Vulkanisation der erfindungsgemäßen Kautschukmischungen. Diese Vulkanisate weisen insbesondere bei Anwendung in Reifen die Vorteile ein hervorragendes Eigenschaftsprofil und einen unerwartet niedrigen Rollwiderstand auf.

Die erfindungsgemäßen Kautschukvulkanisate eignen sich zur Herstellung von Formkörpern mit verbesserten Eigenschaften, z.B. für die Herstellung von Kabelmänteln, Schläuchen, Treibriemen, Förderbändern, Walzenbelägen, Reifen, Schuhsohlen, Dichtungsringen und Dämpfungselementen, besonders bevorzugt zur Herstellung von Reifen.

Ein weiterer Gegenstand der vorliegenden Erfindung ist die Verwendung der Verbindungen der Formel (I) zur Herstellung von Kautschukmischungen, und deren Vulkanisaten. Bevorzugt enthalten die Kautschukmischungen zumindest mindestens einen Kautschuk, zumindest einen Füllstoff und zumindest eine Verbindung der Formel (I).

### Bestimmung der Eigenschaften von Kautschukmischung bzw. Vulkanisaten:

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Als Ausvulkanisationszeit, wird die Zeit bestimmt, bei der 95% des Kautschuks vernetzt ist. Die gewählte Temperatur betrug 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A mittels eines digitalen Shore-Härte-Testers (Zwick GmbH & Co. KG, Ulm) bestimmt wurden. Die Härte eines Kautschukvulkanisates gibt einen ersten Hinweis über dessen Steifigkeit wieder.

### Zugversuch:

Der Zugversuch dient direkt zur Ermittlung der Belastungsgrenzen eines Elastomers und erfolgt nach DIN 53504. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette. Der Verlustfaktor tan δ wird dabei indirekt über das Verhältnis zwischen Verlustmodul G" und Speichermodul G' bestimmt. Der Verlustfaktor tan δ bei 60 °C geht mit dem Rollwiderstand einher und sollte möglichst niedrig sein. Der Verlustfaktor tan δ bei 0 °C geht mit der Nasshaftung einher und sollte möglichst hoch sein.

### Abkürzungen:

| Handelsname | Erläuterung | Hersteller/Vertrieb |
|---|---|---|
| BUNA VSL 5025-2 HM | SBR | LANXESS Deutschland GmbH |
| BUNA CB 24 | BR | LANXESS Deutschland GmbH |
| VULKASIL S | Kieselsäure | LANXESS Deutschland GmbH |
| ZINKWEISS ROTSIEGEL | Zinkoxid | Grillo Zinkoxid GmbH |
| CORAX N 339 | Ruß | Degussa-Evonik GmbH |
| TUDALEN 1849-2 | Mineralöl | Hansen&Rosenthal KG |
| VULKANOX 4020/LG | N-1,3-Dimethylbutyl-N-phenyl-p-phenylendiamin | LANXESS Deutschland GmbH |
| VULKANOX HS/LG | 2,2,4-Trimethyl-1,2-dihydrochinolin oligomerisiert | LANXESS Deutschland GmbH |
| ANTILUX 654 | Lichtschutzwachs | LANXESS Deutschland GmbH |
| TESPT (SI 69) | Bis(triethoxysilylpropyl)tetrasulfid | Evonik Industries |
| DMESPT | Bis-(dimethylethoxysilylpropyl)-tetrasulfid | Gelest Inc., Morrisville, USA |
| DMESiBT | Bis-(dimethylethoxysilylisobutyl)-tetrasulfid | Gelest Inc., Morrisville, USA |
| VULKACIT D/C | 1,3-Diphenylguanidin | LANXESS Deutschland GmbH |
| VULKACIT CZ/C | N-cyclohexyl-2-benzothiazol-sulfenamid | LANXESS Deutschland GmbH |
| Rhenogran TBzTD-70 | tetrabenzylthiuram disulphide | LANXESS Deutschland GmbH |

### Beispiele

Die Verbindungen der Formel (I) wurden in äquimolaren Mengen in Kautschukmischungen eingesetzt. Zum Erreichen einer vergleichbaren Vernetzungsdichte, welche für den Modul 300, die Bruchdehnung und die Festigkeit wesentlich ist, wurde gemäß KGK (2015), 68(4), 38-45 bei den Verbindungen, bei denen zwei der Ethoxy-Gruppen durch Methyl-Gruppen ersetzt waren (vgl. DMESPT und DMES*ⁱ*BT), eine etwas höhere Schwefelmenge zudosiert.

Die Mischungen wurden im Kneter bei 150°C Innentemperatur hergestellt. Schwefel und Beschleuniger wurden auf der Walze bei 50°C nachgemischt. Zur Vulkanisation wurden die Mischungen in beheizbaren Pressen 30 Minuten lang auf 170°C erhitzt.

Die Prüfungen zeigten, dass die erfindungsgemäße Verbindung (I) aus Beispiel A zu wesentlich vorteilhafteren Anwendungseigenschaften der Vulkanisate führt als die Vergleichsverbindungen (Vgl. 1 & 2). Dies wird deutlich an der dynamischen Dämpfung bei 60°C (gemessen als Verlustfaktor tan δ), welche mit dem Rollwiderstand eines Reifens korreliert, wobei niederere Werte vorteilhaft sind. Dabei ist es überraschend, dass gleichzeitig die dynamische Dämpfung bei 0°C (gemessen als tan δ bei 0°C), welche mit der Naßhaftung korreliert, bei der erfindungsgemäßen Verbindung (I) aus Beispiel A höher ist als bei beiden Vergleichsbeispielen. Zudem ist überraschend, dass einer der großen Nachteile der Vergleichsubstanz DMESPT, nämlich die extrem kurze Ausvulkanisationszeit, die bei der Herstellung (Vulkanisation) von Formkörpern enthaltend verschiedene Kautschukzusammensetzungen, wie z.B. Reifen, zu Kompatibilitätsproblemen führt, mit der erfindungsgemäßen Verbindung deutlich verbessert werden kann.

| Rezeptur | Vgl.1 | Vgl. 2 | A |
|---|---|---|---|
| VSL 5025-2 HM | 96 | 96 | 96 |
| Buna CB 24 | 30 | 30 | 30 |
| Vulkasil S | 80 | 80 | 80 |
| Stearinsäure | 1 | 1 | 1 |
| Zinkoxid | 2,5 | 2,5 | 2,5 |
| Ruß Corax N 339 | 6,4 | 6,4 | 6,4 |
| Tudalen 1849-2 | 8 | 8 | 8 |
| Vulkanox HS/LG | 1 | 1 | 1 |
| Vulkanox 4020/LG | 1 | 1 | 1 |
| Antilux 654 | 1,5 | 1,5 | 1,5 |
| TESPT | 6,4 | - | - |
| DMESPT | - | 5,0 | - |
| DMES*ⁱ*BT | - | - | 5,3 |
| | | | |

| Auf der Walze / 50 C: | | | |
|---|---|---|---|
| VULKACIT CZ/C | 1,5 | 1,5 | 1,5 |
| VULKACIT D/C | 2,0 | 2,0 | 2,0 |
| Schwefel | 1,5 | 2,1 | 2,1 |
| | | | |

| Ausvulkanisationszeit | | | |
|---|---|---|---|
| T95 (s) | 1144 | 326 | 550 |
| | | | |
| Mechanische Eigenschaften: Modul 300 (MPa) | 16,0 | 15,9 | 15,3 |
| Festigkeit (MPa) | 19,8 | 20,7 | 20,8 |
| Bruchdehnung (%) | 358 | 374 | 385 |
| Härte (Shore A) | 66 | 67 | 67 |
| Elastizität (60°C) | 54 | 58 | 61 |
| tan δ (0°C) | 0,392 | 0,404 | 0,418 |
| tan δ (60°C) | 0,102 | 0,086 | 0,079 |

Unter Verwendung von Vulcuren als DPG-Ersatz wurde nach der letzten Mischstufe (5-stufiger Mischprozess) eine geringere Mischungsviskosität mit verbesserter Scorchsicherheit (längere Scorch-Zeit) erreicht. Die Ausvulkanisationszeit T95 blieb durch die Substitution unverändert.

Das mechanische Eigenschaftsprofil der Compounds bezüglich Härte, Modul 300, Bruchdehnung und Zugfestigkeit blieb bei Substitution von DPG durch Vulcuren oder TBzTD weitgehend unbeeinträchtigt. Zudem besitzen die Vulcuren und TBzTD vernetzten Vulkanisate eine bessere Abriebsbeständigkeit.

Die Verwendung von Vulcuren als DPG-Ersatz ist vorteilhaft gegenüber TBzTD in Bezug auf Mischungsviskosität und Ausvulkanisationszeit (T 95).

| Rezeptur | 1 | 2 | 3 |
|---|---|---|---|
| Buna VSL 5025-2 HM | 96 | 96 | 96 |
| Buna CB 24 | 30 | 30 | 30 |
| Vulkasil S | 80 | 80 | 80 |
| Stearinsäure | 1 | 1 | 1 |
| Zinkoxid | 2,5 | 2,5 | 2,5 |
| DMESiBT | 5,3 | 5,3 | 5,3 |
| Ruß Corax N 339 | 6,4 | 6,4 | 6,4 |
| Tudalen 1849-2 | 8 | 8 | 8 |
| Vulkanox HS/LG | 1 | 1 | 1 |
| Vulkanox 4020/LG | 1 | 1 | 1 |
| Antilux 654 | 1,5 | 1,5 | 1,5 |
| | | | |

| Auf der Walze / 50 C: | | | |
|---|---|---|---|
| Vulkacit CZ/EGC | 1,5 | 1,5 | 1,5 |
| Schwefel | 2,1 | 2,1 | 2,1 |
| VULKACIT D/C | 2,5 | - | - |
| Vulcuren | - | 0,4 | - |
| Rhenogran TBzTD-70 | - | - | 0,6 |
| | | | |

| **Ausprüfungen** | | | |
|---|---|---|---|
| Mooney-Viskosität, ML1 +4 (1. Mischstufe) | 120,14 | 120,58 | 130,09 |
| Mooney-Viskosität, ML1 +4 (5. Mischstufe) | 87,12 | 85,91 | 93,2 |
| Scorchsicherheit (MS-T5) (s) | 782,6 | 1174,4 | 942 |
| Ausvulkanisationszeit T95 (s) | 428,73 | 447,18 | 2209,8 |
| | | | |
| Mechanische Eigenschaften: Modul 300 (MPa) | 14,6 | 14,9 | 15 |
| Festigkeit (MPa) | 24,2 | 24,5 | 22,8 |
| Bruchdehnung (%) | 453 | 456 | 424 |
| Härte (Shore A) | 68 | 68 | 68 |
| Abrieb (ISO 4649) (mm) | 76,7 | 64 | 62,7 |

## Patentansprüche

1. Kautschukmischungen, enthaltend mindestens einen Kautschuk, mindestens einen Füllstoff, sowie mindestens eine Verbindung der Formel 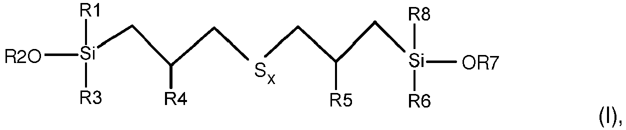 worin
R1, R3, R6 und R8 gleich oder verschieden sind und Methyl oder Ethyl bedeuten,
R4, und R5 gleich oder verschieden sind und Methyl oder Ethyl bedeuten,
R2 und R7 gleich oder verschieden sind und Methyl oder Ethyl bedeuten und
x = 4 bedeutet.

2. Kautschukmischungen gemäß Anspruch 1, worin R2 und R7 Ethyl bedeuten.

3. Kautschukmischungen gemäß Anspruch 1 oder 2, worin R1, R3, R6 und R8 Methyl bedeuten.

4. Kautschukmischungen gemäß einem oder mehreren der Ansprüche 1 bis 3, worin R4 und R5 und Methyl bedeuten

5. Kautschukmischung nach einem der Ansprüche 1 bis 4, wobei der Gehalt an Verbindungen der Formel (I) 0,1 bis 15 phr, vorzugsweise 1 bis 12 phr, besonders bevorzugt 2 bis 10 phr und ganz besonders bevorzugt 3 bis 8 phr beträgt.

6. Kautschukmischung nach einem der Ansprüche 1 bis 5, enthaltend zusätzlich mindestens einen hydroxylgruppen-haltigen oxidischen Füllstoff, vorzugsweise Kieselsäure mit einer spezifischen BET Oberfläche von 5 bis 1000 m²/g.

7. Kautschukmischung nach einem der Ansprüche 1 bis 6, die einen Gehalt an Diphenylguanidin und/oder substituierten Diphenylguanidinen von maximal 0,4 phr, vorzugsweise maximal 0,2, weiter bevorzugt weniger als 0.1 und ganz besonders bevorzugt weniger als 0,01 phr aufweist.

8. Kautschukmischung nach einem der Ansprüche 1 bis 7, enthaltend zusätzlich einen oder mehrere Vernetzer.

9. Verfahren zur Herstellung einer Kautschukmischung nach einem der Ansprüche 1 bis 8, wobei mindestens ein Kautschuk, ein Füllstoff und eine Verbindung der Formel (I) gemäß einem der Ansprüche 1 bis 4 miteinander vermischt werden, vorzugsweise bei einer Temperatur von 60 bis 200°C, besonders bevorzugt bei 90 ° bis 180°C.

10. Verfahren zur Herstellung einer Kautschukmischung nach einem der Ansprüche 1 bis 8, wobei mindestens ein Kautschuk, ein Füllstoff und eine Verbindung der Formel (I) mit x = 4 zusammen mit Schwefel bei einer Temperatur von 100 bis 200°C, vorzugsweise 130 ° bis 180°C miteinander vermischt werden.

11. Verfahren zur Herstellung von Kautschukvulkanisaten durch Vulkanisation einer Kautschukmischung gemäß einem der Ansprüche 1 bis 8, bevorzugt bei einer Temperatur von 100 bis 250 °C, besonders bevorzugt von 130 bis 180 °C.

12. Verwendung von Kautschukmischungen gemäß einem der Ansprüche 1 bis 8 zur Herstellung von Vulkanisaten.

13. Vulkanisate, erhältlich durch Vulkanisation von Kautschukmischungen gemäß einem der Ansprüche 1 bis 8.

14. Kautschukprodukte, insbesondere Reifen enthaltend ein oder mehrere Kautschukvulkanisate gemäß Anspruch 13.

15. Verwendung von Verbindungen der Formel (I) gemäß einem der Ansprüche 1 bis 4 zur Herstellung von Kautschukmischungen gemäß einem der Ansprüche 1 bis 8, Vulkanisaten gemäß Anspruch 13 oder Kautschukprodukten gemäß Anspruch 14.

## Claims

1. Rubber mixtures containing at least one rubber, at least one filler and at least one compound of formula 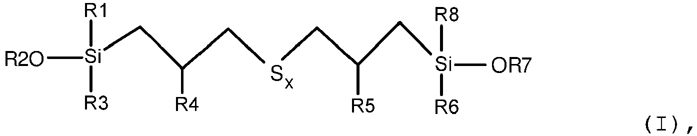 wherein
R1, R3, R6 and R8 are identical or different and represent methyl or ethyl,
R4 and R5 are identical or different and represent methyl or ethyl,
R2 and R7 are identical or different and represent methyl or ethyl and
x = 4.

2. Rubber mixtures according to Claim 1, wherein R2 and R7 represent ethyl.

3. Rubber mixtures according to Claim 1 or 2, wherein R1, R3, R6 and R8 represent methyl.

4. Rubber mixtures according to one or more of Claims 1 to 3, wherein R4 and R5 represent methyl.

5. Rubber mixture according to any of Claims 1 to 4, wherein the content of compounds of formula (I) is 0.1 to 15 phr, preferably 1 to 12 phr, particularly preferably 2 to 10 phr and very particularly preferably 3 to 8 phr.

6. Rubber mixture according to any of Claims 1 to 5, additionally containing at least one hydroxyl-containing oxidic filler, preferably silica having a specific BET surface area of 5 to 1000 m²/g.

7. Rubber mixture according to any of Claims 1 to 6, having a content of diphenylguanidine and/or substituted diphenylguanidines of not more than 0.4 phr, preferably not more than 0.2, more preferably less than 0.1 and very particularly preferably less than 0.01 phr.

8. Rubber mixture according to any of Claims 1 to 7, additionally containing one or more crosslinkers.

9. Process for producing a rubber mixture according to any of Claims 1 to 8, wherein at least one rubber, a filler and a compound of formula (I) according to any of Claims 1 to 4 are mixed with one another, preferably at a temperature of 60°C to 200°C, particularly preferably at 90°C to 180°C.

10. Process for producing a rubber mixture according to any of Claims 1 to 8, wherein at least one rubber, a filler and a compound of formula (I) where x = 4 are mixed with one another together with sulfur at a temperature of 100°C to 200°C, preferably 130°C to 180°C.

11. Process for producing rubber vulcanizates by vulcanization of a rubber mixture according to any of Claims 1 to 8, preferably at a temperature of 100°C to 250°C, particularly preferably of 130°C to 180°C.

12. Use of rubber mixtures according to any of Claims 1 to 8 for producing vulcanizates.

13. Vulcanizates obtainable by vulcanization of rubber mixtures according to any of Claims 1 to 8.

14. Rubber products, in particular tires, containing one or more rubber vulcanizates according to Claim 13.

15. Use of compounds of formula (I) according to any of Claims 1 to 4 for producing rubber mixtures according to any of Claims 1 to 8, vulcanizates according to Claim 13 or rubber products according to Claim 14.

## Revendications

1. Mélanges de caoutchouc, contenant au moins un caoutchouc, au moins une charge, ainsi qu'au moins un composé de formule 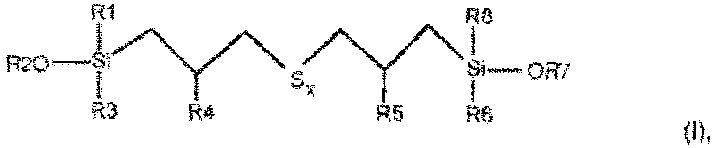 dans laquelle
R1, R3, R6 et R8 sont identiques ou différents et signifient méthyle ou éthyle,
R4 et R5 sont identiques ou différents et signifient méthyle ou éthyle,
R2 et R7 sont identiques ou différents et signifient méthyle ou éthyle et
x = 4.

2. Mélanges de caoutchouc selon la revendication 1, dans lesquels R2 et R7 signifient éthyle.

3. Mélanges de caoutchouc selon la revendication 1 ou 2, dans lesquels R1, R3, R6 et R8 signifient méthyle.

4. Mélanges de caoutchouc selon l'une ou plusieurs des revendications 1 à 3, dans lesquels R4 et R5 signifient méthyle.

5. Mélange de caoutchouc selon l'une quelconque des revendications 1 à 4, la teneur en composés de formule (I) étant de 0,1 à 15 phr, de préférence 1 à 12 phr, particulièrement préférablement 2 à 10 phr et tout particulièrement préférablement 3 à 8 phr.

6. Mélange de caoutchouc selon l'une quelconque des revendications 1 à 5, contenant de plus au moins une charge à base d'oxyde contenant des groupes hydroxyle, de préférence une silice dotée d'une surface spécifique BET de 5 à 1 000 m²/g.

7. Mélange de caoutchouc selon l'une quelconque des revendications 1 à 6, qui présente une teneur en diphénylguanidine et/ou en diphénylguanidines substituées de maximum 0,4 phr, de préférence de maximum 0,2 phr, encore préférablement inférieure à 0,1 et/ou tout particulièrement préférablement inférieure à 0,01 phr.

8. Mélange de caoutchouc selon l'une quelconque des revendications 1 à 7, contenant de plus un ou plusieurs agents de réticulation.

9. Procédé pour la préparation d'un mélange de caoutchouc selon l'une quelconque des revendications 1 à 8, au moins un caoutchouc, une charge et un composé de formule (I) selon l'une quelconque des revendications 1 à 4 étant mélangés ensemble, de préférence à une température de 60 à 200 °C, particulièrement préférablement de 90° à 180 °C.

10. Procédé pour la préparation d'un mélange de caoutchouc selon l'une quelconque des revendications 1 à 8, au moins un caoutchouc, une charge et un composé de formule (I) avec x = 4 étant mélangés ensemble conjointement avec du soufre à une température de 100 à 200 °C, de préférence 130° à 180 °C.

11. Procédé pour la préparation de vulcanisats de caoutchouc par vulcanisation d'un mélange de caoutchouc selon l'une quelconque des revendications 1 à 8, préférablement à une température de 100 à 250 °C, particulièrement préférablement de 130 à 180 °C.

12. Utilisation de mélanges de caoutchouc selon l'une quelconque des revendications 1 à 8 pour la préparation de vulcanisats.

13. Vulcanisats, obtenus par vulcanisation de mélanges de caoutchouc selon l'une quelconque des revendications 1 à 8.

14. Produits de caoutchouc, en particulier pneus contenant un ou plusieurs vulcanisats de caoutchouc selon la revendication 13.

15. Utilisation de composés de formule (I) selon l'une quelconque des revendications 1 à 4 pour la préparation de mélanges de caoutchouc selon l'une quelconque des revendications 1 à 8, de vulcanisats selon la revendication 13 ou de produits de caoutchouc selon la revendication 14.
